# EUROPEAN PATENT APPLICATION

(11) **EP 4 588 530 A1**
(43) Date of publication of application: **23.07.2025**
(21) Application number: 24197266.0
(22) Date of filing: 29.08.2024
(51) Int. Cl.: A62C 3/07, A62C 3/16, A62C 35/10, H01M 50/209, H01M 50/383, H01M 10/6552, H01M 10/6557

(54) **BATTERY MODULE**

(30) Priority: 19.01.2024 KR 20240008597
(71) Applicant: SAMSUNG SDI CO., LTD., Giheung-gu Yongin-si, Gyeonggi-do 17084 (KR)
(72) Inventor: KIM, Jintaek, 16678 Suwon-si (KR)
(74) Representative: Marks & Clerk LLP

(57) **Abstract**

A battery module includes a housing (100), a first battery cell (200) in the housing, a second battery cell (300) in the housing and spaced apart from the first battery cell, a fire extinguishing member (400) between the first battery cell and the second battery cell and configured to spray a fire extinguishing material on the first battery cell and the second battery cell, and a support member (500) in the housing and supporting the fire extinguishing member.

## Description

### BACKGROUND

### 1. Field

Aspects of embodiments of the present disclosure relate to a battery module.

### 2. Discussion of Related Art

Generally, as the demand for portable electronic products, such as notebook computers, video cameras, and portable phones, increases rapidly, and commercialization of robots, electric vehicles, and the like begins in earnest, research on high-performance secondary batteries capable of repeated charging and discharging is being actively conducted.

Secondary batteries are widely used for a driving device or energy storage in not only small devices, such as portable electronic devices, but also in medium-to-large devices, such as electric vehicles and energy storage systems (ESSs). Particularly, in the case of the medium-to-large devices, a battery module may be formed in a form in which a plurality of battery cells are electrically connected to each other in order to increase the output power and capacity of the battery.

A fire extinguishing pipe, through which a fire extinguishing material can be sprayed to suppress a fire when the fire occurs, may be installed in a battery module. However, when such a fire extinguishing pipe is disposed outside a module housing, a fire extinguishing efficiency decreases, and a blockage, damage, and the like may occur due to flames, gases, foreign matter, and the like discharged through a vent of a battery cell.

The above-described information disclosed in the technology that forms the background of the present disclosure is provided to improve understanding of the background of the present disclosure, and thus may include information that does not constitute the related art.

### SUMMARY

According to an aspect of embodiments of the present disclosure, a battery module of which a fire extinguishing efficiency is improved and installation and replacement are easy is provided.

The above and other aspects and features of the present disclosure will be described in or will be apparent from the following description of some embodiments of the present disclosure.

According to one or more embodiments, a battery module includes a housing, a first battery cell in the housing, a second battery cell in the housing and spaced apart from the first battery cell, a fire extinguishing member between the first battery cell and the second battery cell and configured to spray a fire extinguishing material on the first battery cell and the second battery cell, and a support member in the housing and supporting the fire extinguishing member.

The fire extinguishing member may include a fire extinguishing tube including a first end portion and a second end portion, an end cap connected to the first end portion to seal the fire extinguishing tube, and a supply port connected to the second end portion to supply the fire extinguishing material to the fire extinguishing tube.

The fire extinguishing tube may be melted when heated at a certain temperature or more.

The fire extinguishing tube may be elastically deformable.

The end cap may include a cap head facing the first end portion, a cap body extending from the cap head and inserted in the first end portion, and a cap lip extending from the cap body and in contact (e.g., close contact) with an inner surface of the first end portion.

The supply port may include a fixing bracket facing the second end portion and coupled to the housing, a first port body extending from the fixing bracket, inserted in the second end portion, and in communication with an internal space of the second end portion, a port lip extending from the first port body and in contact (e.g., close contact) with an inner surface of the second end portion, and a second port body extending from the fixing bracket, protruding outward from the housing, and in communication with the first port body.

The support member may include a holder body between the first battery cell and the second battery cell, a guide rail passing through the holder body and in which the fire extinguishing member is inserted, and a sleeve connected to the holder body and surrounding the fire extinguishing tube.

The holder body may include a first surface facing the first battery cell and a second surface facing the second battery cell, and the sleeve may include a first sleeve connected to the first surface and surrounding a side of the fire extinguishing tube and a second sleeve connected to the second surface and surrounding another side of the fire extinguishing tube.

The first sleeve and the second sleeve may be provided as a plurality of first sleeves and a plurality of second sleeves, and the plurality of the first sleeves and the plurality of second sleeves may be arranged in a longitudinal direction of the guide rail.

The first sleeve and the second sleeve may be alternately arranged in a longitudinal direction of the guide rail.

The first sleeve may include a first support ring between the first battery cell and the first surface and a first pressing member protruding from the first support ring toward the fire extinguishing tube, and the second sleeve may include a second support ring between the second battery cell and the second surface and a second pressing member protruding from the second support ring toward the fire extinguishing tube.

The first pressing member may include a plurality of first pressing protrusions arranged in a circumferential direction of the first support ring.

The first pressing member may include a first pressing ring extending in a circumferential direction of the first support ring.

The support member may further include an end sleeve spaced apart from the holder body and supporting the end cap.

The end sleeve may include a sleeve body extending from the housing toward the holder body and in which the end cap is inserted, and a seating portion which is arranged in the sleeve body and which is in contact with an end portion of the end cap.

The seating portion may include an inclined surface obliquely arranged in an extending direction of the sleeve body.

The end cap may include a cap head facing the first end portion, a cap body extending from the cap head and inserted in the first end portion, and a cap lip extending from the cap body and in contact (e.g., close contact) with an inner surface of the first end portion, and the end sleeve may include a sleeve body extending from the housing toward the holder body and in which the end cap is inserted, and a catching portion which protrudes from an inner surface of the sleeve body and which is in contact with the end cap.

The catching portion may be inserted between the cap lip and the cap head.

The battery module may further include a channel in the housing to guide a flow of the fire extinguishing material sprayed from the fire extinguishing member.

The channel may include a first channel between a bottom surface of the housing and the first battery cell, and a second channel between the bottom surface of the housing and the second battery cell.

At least some of the above and other features of the invention are set out in the claims.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure is not to be construed as being limited to the drawings.
FIG. 1 is a schematic exploded perspective view illustrating a configuration of a battery module according to an embodiment of the present disclosure;
FIG. 2 is a schematic cross-sectional perspective view illustrating the configuration of the battery module according to the embodiment of FIG. 1;
FIG. 3 is a schematic cross-sectional plan view illustrating the configuration of the battery module according to the embodiment of FIG. 1;
FIG. 4 is a schematic perspective view illustrating a configuration of a fire extinguishing member according to the embodiment of FIG. 1;
FIG. 5 is a schematic enlarged view illustrating a configuration of an end cap according to the embodiment of FIG. 1;
FIG. 6 is a schematic enlarged view illustrating an installation state of a supply port according to the embodiment of FIG. 1;
FIG. 7 is an exploded schematic enlarged view illustrating a configuration of the supply port according to the embodiment of FIG. 1;
FIG. 8 is a schematic cut-away perspective view illustrating a configuration of a support member according to the embodiment of FIG. 1;
FIG. 9 is a cut-away perspective view illustrating the configuration of the support member according to the embodiment of FIG. 1 viewed from another viewpoint of FIG. 8;
FIG. 10 is a schematic cross-sectional view illustrating the configuration of the support member according to the embodiment of FIG. 1;
FIG. 11 is a schematic view illustrating a configuration of a sleeve according to the embodiment of FIG. 1;
FIG. 12 is a schematic view illustrating a configuration of a first sleeve according to the embodiment of FIG. 1;
FIGS. 13 and 14 are views illustrating modified examples of a first pressing protrusion and a second pressing protrusion illustrated in FIGS. 11 and 12;
FIGS. 15 and 16 are views illustrating other modified examples of the first pressing protrusion and the second pressing protrusion illustrated in FIGS. 11 and 12;
FIG. 17 is a schematic perspective view illustrating a configuration of an end sleeve according to the embodiment of FIG. 1;
FIG. 18 is a schematic cross-sectional view illustrating the configuration of the end sleeve according to the embodiment of FIG. 1;
FIG. 19 is a schematic cross-sectional view illustrating a configuration of a channel according to the embodiment of FIG. 1;
FIG. 20 is a schematic view illustrating a state in which a fire extinguishing material is introduced into a first channel according to the embodiment of FIG. 1;
FIG. 21 is a schematic perspective view illustrating a configuration of a first pressing member and a second pressing member according to another embodiment of the present disclosure;
FIG. 22 is a schematic front view illustrating the configuration of the first pressing member and the second pressing member according to the embodiment of FIG. 21;
FIG. 23 is a schematic cross-sectional view illustrating a configuration of the first pressing member according to the embodiment of FIG. 21;
FIG. 24 is a schematic cross-sectional view illustrating a configuration of an end sleeve according to another embodiment of the present disclosure; and
FIGS. 25 and 26 are views illustrating modified examples of a catching portion illustrated in FIG. 24.

### DETAILED DESCRIPTION

Herein, some embodiments of the present disclosure will be described, in further detail, with reference to the accompanying drawings. The terms or words used in this specification and claims are not to be construed as being limited to the usual or dictionary meaning and are to be interpreted as having a meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not necessarily represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer, or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein are to be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are the same or substantially the same. Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part, or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

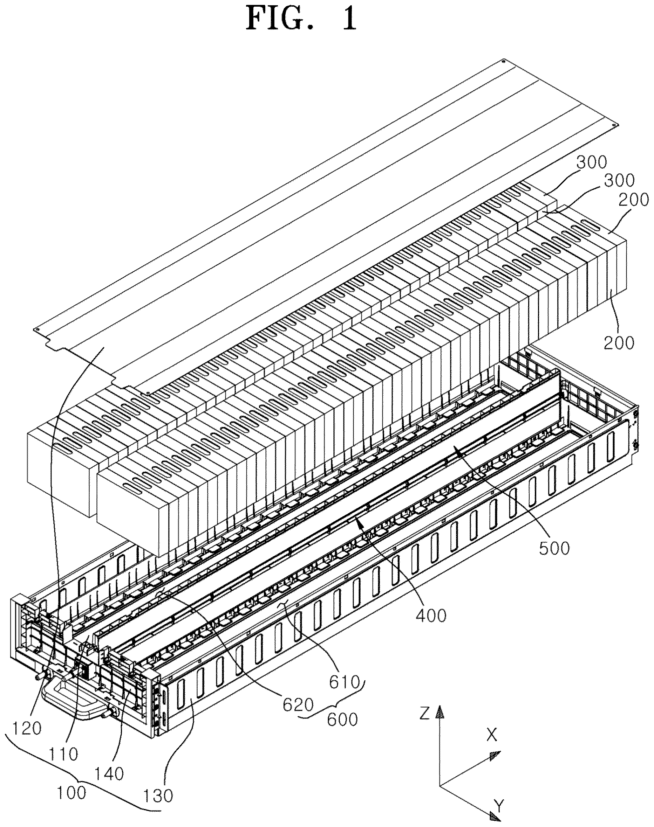

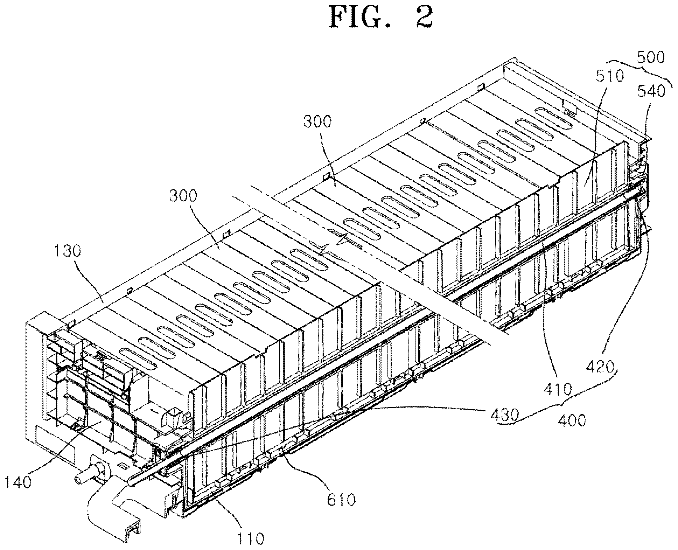

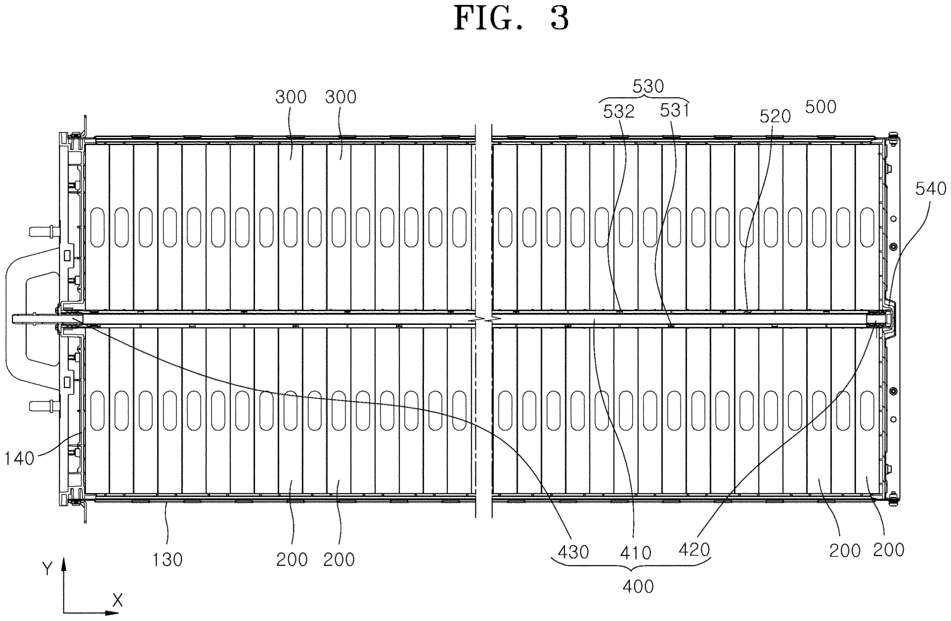

FIG. 1 is a schematic exploded perspective view illustrating a configuration of a battery module according to an embodiment of the present disclosure; FIG. 2 is a schematic cross-sectional perspective view illustrating the configuration of the battery module according to the embodiment of FIG. 1, and FIG. 3 is a schematic cross-sectional plan view illustrating the configuration of the battery module according to the embodiment of FIG. 1.

Referring to FIGS. 1 to 3, a battery module according to the present embodiment includes a housing 100, a first battery cell 200, a second battery cell 300, a fire extinguishing member 400, and a support member 500.

The housing 100 may accommodate therein the first battery cell 200 and the second battery cell 300, which will be described below, and may protect the first battery cell 200 and the second battery cell 300 from external foreign matter, shock, and the like.

The housing 100 may include a bottom plate 110, a top plate 120, a side plate 130, and an end plate 140.

The bottom plate 110 and the top plate 120 may form lower and upper exteriors of the housing 100. In an embodiment, a cooling plate (not shown) in which cooling water for cooling the first battery cell 200 and the second battery cell 300 circulates may be installed on the bottom plate 110. A busbar (not shown) electrically connected to the first battery cell 200 and the second battery cell 300 may be installed on the top plate 120. However, specific shapes of the bottom plate 110 and the top plate 120 are not limited to shapes illustrated in FIGS. 1 to 3, and a design thereof may be variously changed according to a size, a shape, and the like of the housing 100.

The side plate 130 may be provided as a pair of side plates 130. The pair of side plates 130 may form both side exteriors of the housing 100. A lower end portion and an upper end portion of the side plate 130 may be coupled to the bottom plate 110 and the top plate 120, respectively, by welding, bolting, or the like. However, a specific shape of the side plate 130 is not limited to a shape illustrated in FIGS. 1 to 3, and a design thereof may be variously changed according to the size, the shape, and the like of the housing 100.

The end plate 140 may be formed as a pair of end plates 140. The pair of end plates 140 may form front and rear exteriors of the housing 100. A lower end portion and an upper end portion of the end plate 140 may be coupled to the bottom plate 110 and the top plate 120, respectively, by welding, bolting, or the like. Left and right end portions of the end plate 140 may be coupled to the pair of side plates 130 by welding, bolting, or the like. However, a specific shape of the end plate 140 is not limited to a shape illustrated in FIGS. 1 to 3, and a design thereof may be variously changed according to the size, the shape, and the like of the housing 100.

A longitudinal direction of the housing 100 described below may be a direction parallel to an X-axis based on FIGS. 1 to 3, that is, a direction perpendicularly passing through the pair of end plates 140. In addition, a width direction of the housing 100 may be a direction parallel to a Y-axis based on FIGS. 1 to 3, that is, a direction perpendicularly passing through the pair of side plates 130.

The first battery cell 200 and the second battery cell 300 may function as a unit structure for storing and supplying power in the battery module.

An example of each of the first battery cell 200 and the second battery cell 300 may be a prismatic secondary battery in which an electrode assembly (not shown) including a positive plate (not shown) and a negative plate (not shown) at both, or opposite, sides of a separator (not shown) is disposed in a case (not shown) and which may charge and discharge an amount (e.g., a predetermined amount) of power. In an embodiment, the electrode assembly may be formed in a winding type, in which the separator, the positive plate, and the negative plate are wound in a roll type, or a stack type in which the separator, the positive plate, and the negative plate are stacked on each other.

The first battery cell 200 and the second battery cell 300 may be provided as a plurality of first battery cells 200 and a plurality of second battery cells 300. The plurality of first battery cells 200 may be arranged in the longitudinal direction of the housing 100, that is, a direction parallel to an X-axis direction based on FIGS. 1 to 3. The plurality of second battery cells 300 may be arranged in the longitudinal direction of the housing 100. In an embodiment, a number of the first battery cells 200 and a number of the second battery cells 300 may be the same.

The first battery cell 200 and the second battery cell 300 may be disposed to be spaced by a distance (e.g., a predetermined distance) from each other in the width direction of the housing 100, that is, a direction parallel to a Y-axis direction based on FIGS. 1 to 3. Accordingly, a space in which the fire extinguishing member 400 and the support member 500 may be installed may be secured between the first battery cell 200 and the second battery cell 300.

Lower surfaces of the first battery cells 200 and the second battery cells 300 may be disposed to be spaced by a distance (e.g., a predetermined distance) from an upper surface of the bottom plate 110. In this case, the first battery cell 200 and the second battery cell 300 may be seated on a support part (not shown) extending from the side plate 130 and the like, and, thus, a state in which the first battery cell 200 and the second battery cell 300 are spaced apart from the upper surface of the bottom plate 110 may be maintained.

The fire extinguishing member 400 may spray a fire extinguishing material onto the first battery cell 200 and the second battery cell 300 in conjunction with or in response to an increase in temperature of the first battery cell 200 or the second battery cell 300. That is, the fire extinguishing member 400 may extinguish a fire occurring at the first battery cell 200 or the second battery cell 300. In this case, examples of the fire extinguishing material may include any of various substances, such as Novec 1230, water, Halon 1211, Halon 1301, a loaded stream agent, and soda-acid, each having a fire extinguishing function.

The fire extinguishing member 400 may be disposed between the first battery cell 200 and the second battery cell 300. Accordingly, a malfunction of the fire extinguishing member 400 due to a flame and foreign matter discharged through vents of the first battery cell 200 and the second battery cell 300 may be prevented or substantially prevented.

The fire extinguishing member 400 may be inserted into the housing 100 from the outside of the housing 100 or separated from the inside of the housing 100 to the outside of the housing 100 by passing through an end plate 140 of the pair of end plates 140. Accordingly, the fire extinguishing member 400 may be easily replaced from the housing 100 when the fire extinguishing member 400 sprays the fire extinguishing material or if it is is damaged.

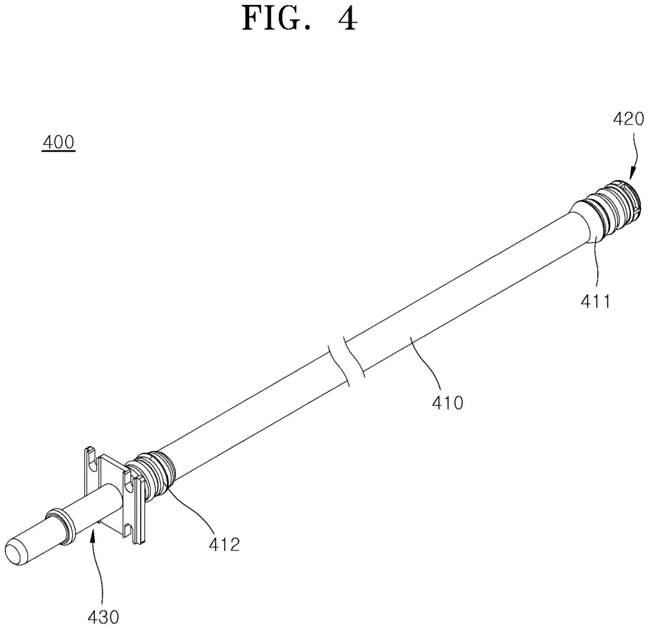

FIG. 4 is a schematic perspective view illustrating a configuration of the fire extinguishing member according to an embodiment of the present disclosure.

Referring to FIG. 4, the fire extinguishing member 400 may include a fire extinguishing tube 410, an end cap 420, and a supply port 430.

The fire extinguishing tube 410 may be formed in a hollow pipe shape. The fire extinguishing tube 410 may be disposed between the first battery cell 200 and the second battery cell 300. A longitudinal direction of the fire extinguishing tube 410 may be disposed parallel to the longitudinal direction of the housing 100. A portion of an entire circumferential surface of the fire extinguishing tube 410 may be disposed to face a side surface of the first battery cell 200, and a remaining portion of the entire circumferential surface of the fire extinguishing tube 410 may be disposed to face a side surface of the second battery cell 300. A location of the fire extinguishing tube 410 may be fixed between the first battery cell 200 and the second battery cell 300 by the support member 500, which will be described below.

The fire extinguishing material supplied through the supply port 430, which will be described below, may fill the inside of the fire extinguishing tube 410. In an embodiment, the fire extinguishing tube 410 may be melted when heated at a certain temperature (e.g., a set temperature) or more. Accordingly, the fire extinguishing tube 410 may be melted when a temperature of the first battery cell 200 and the second battery cell 300 rises or a flame occurs and may spray the fire extinguishing material filling the inside of the fire extinguishing tube 410 to the outside. In an embodiment, the fire extinguishing tube 410 may be provided to be elastically deformed. For example, the fire extinguishing tube 410 may be formed of a synthetic resin material, such as polypropylene, polyethylene, nylon, polyvinyl chloride (PVC), or the like. In this case, the certain temperature (e.g., the set temperature) may be variously changed into a value in the range of about 80 °C to 300 °C in a design stage.

The fire extinguishing tube 410 may include a first end portion 411 and a second end portion 412.

The first end portion 411 and the second end portion 412 may form exteriors of both, or opposite, end portions of the fire extinguishing tube 410. The first end portion 411 and the second end portion 412 may be spaced apart from each other in the longitudinal direction of the fire extinguishing tube 410. As the fire extinguishing tube 410 is completely inserted into the housing 100, the first end portion 411 and the second end portion 412 may be disposed to face the pair of end plates 140. In the first end portion 411 and the second end portion 412, sides facing the end plates 140 may be formed to be open.

The end cap 420 is connected to the first end portion 411 and seals the fire extinguishing tube 410. That is, the end cap 420 may prevent or substantially prevent the fire extinguishing material from leaking from the fire extinguishing tube when the first battery cell 200 and the second battery cell 300 operate normally.

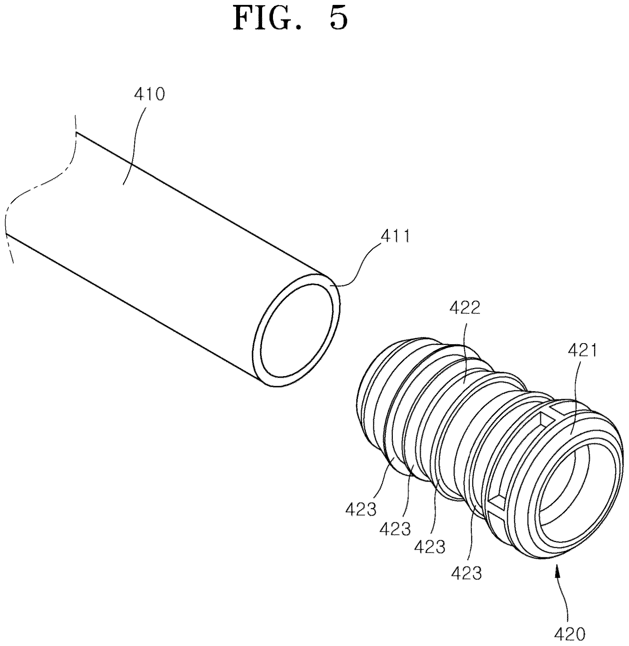

FIG. 5 is a schematic enlarged view illustrating a configuration of the end cap according to an embodiment of the present disclosure.

Referring to FIG. 5, the end cap 420 may include a cap head 421, a cap body 422, and a cap lip 423.

The cap head 421 may be disposed with an inner surface to face an open side of the first end portion 411. The inner surface of the cap head 421 may be fitted to be in close contact with an open surface of the open side of the first end portion 411. A cross-sectional area of the cap head 421 may be greater than a cross-sectional area of the first end portion 411. Accordingly, the cap head 421, when the end cap 420 is inserted in the first end portion 411, may block the fire extinguishing material from leaking to the outside of the fire extinguishing tube 410 through the open side of the first end portion 411. However, a specific shape of the cap head 421 is not limited to a shape illustrated in FIG. 5, and a design thereof may be variously changed in the range of a technical shape capable of sealing the open side of the first end portion 411.

The cap body 422 may extend from the cap head 421 and may be inserted into the open side of the first end portion 411. The cap body 422 may have a cylindrical shape extending from the inner surface of the cap head 421 in a direction parallel to the longitudinal direction of the fire extinguishing tube 410. A cross-sectional area of the cap body 422 may be smaller than a cross-sectional area of the first end portion 411. As the cap head 421 is to be in contact with the open surface of the first end portion 411, the cap body 422 may be inserted into the first end portion 411 through an opening of the first end portion 411 until the cap head 421 contacts the open surface.

The cap lip 423 may extend from the cap body 422 and may be in close contact with an inner surface of the first end portion 411. That is, the cap lip 423 may prevent or substantially prevent the cap body 422 from being separated from the first end portion 411 by a contact force between the cap lip 423 and the first end portion 411. Accordingly, the cap lip 423 may firmly maintain the contact force between the cap head 421 and the first end portion 411.

The cap lip 423 may protrude from an outer circumferential surface of the cap body 422 in a radial direction of the cap body 422. In an embodiment, the cap lip 423 may continuously extend in a circumferential direction of the cap body 422 and may be formed in a substantially circular ring shape. As the cap body 422 is inserted into the first end portion 411, the cap lip 423 may press the inner surface of the first end portion 411 in the radial direction of the fire extinguishing tube 410. In an embodiment, the cap lip 423 may elastically deform a partial region of the first end portion 411 in the radial direction of the fire extinguishing tube 410 using such a pressing force and may be in close contact with, and hook-coupled to, the inner surface of the first end portion 411. In an embodiment, the cap lip 423 may be formed such that a width decreases toward an end portion. Accordingly, the cap lip 423 may further increase a magnitude of the pressing force acting between the cap lip 423 and the inner surface of the first end portion 411.

The cap lip 423 may be provided as a plurality of cap lips 423. The plurality of cap lips 423 may be arranged to be spaced by a certain distance (e.g., a set distance) from each other in a longitudinal direction of the cap body 422. However, a design of a number, distances, and the like of the cap lips 423 may be variously changed according to a length, a cross-sectional area, and the like of the cap body 422.

The supply port 430 is connected to the second end portion 412, and the fire extinguishing material is supplied to the fire extinguishing tube 410 through the supply port 430. That is, the supply port 430 may allow the fire extinguishing material supplied from the outside of the housing 100 to flow to the inside of the fire extinguishing tube 410.

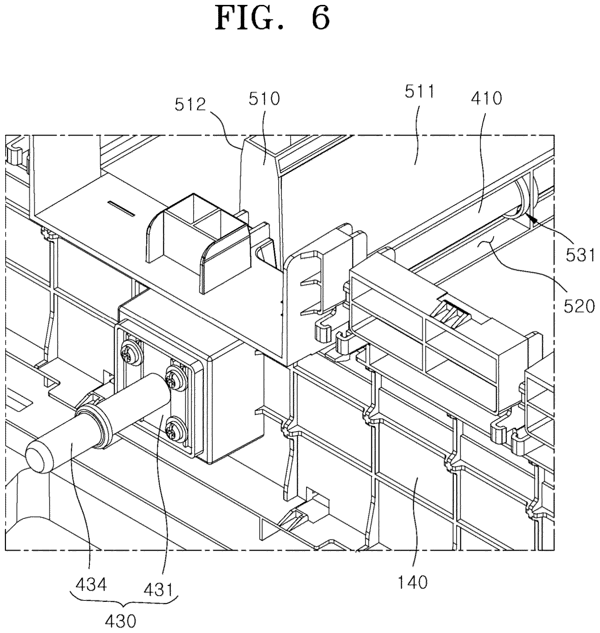

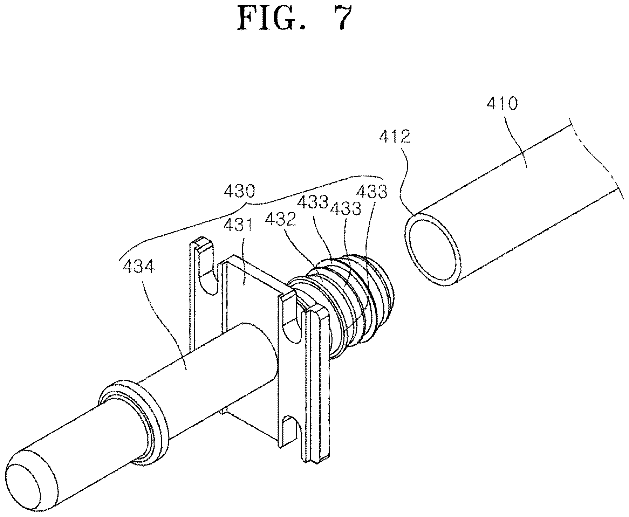

FIG. 6 is a schematic enlarged view illustrating an installation state of the supply port according to an embodiment of the present disclosure; and FIG. 7 is a schematic enlarged view illustrating a configuration of the supply port according to the embodiment of the present disclosure.

Referring to FIGS. 6 and 7, in an embodiment, the supply port 430 may include a fixing bracket 431, a first port body 432, a port lip 433, and a second port body 434.

The fixing bracket 431 may be formed in a substantially flat plate shape and disposed with an inner surface to face the open side of the second end portion 412. The fixing bracket 431 may be in close contact with an open surface of the open side of the second end portion 412, once assembled. The fixing bracket 431 may be disposed outside the housing 100 and coupled to an outer surface of the housing 100, that is, to the end plate 140 through which the fire extinguishing tube 410 passes and is inserted. In this case, the fixing bracket 431 may be detachably coupled to the end plate 140 by bolting, fitting, or the like.

The first port body 432 may extend from the inner surface of the fixing bracket 431 facing the end plate 140. The first port body 432 may be formed in a hollow pipe shape of which both, or opposite, sides are open. A longitudinal direction of the first port body 432 may be disposed parallel to the longitudinal direction of the fire extinguishing tube 410. As the fixing bracket 431 is in contact with the open surface of the second end portion 412, the first port body 432 may be inserted into the second end portion 412. An end portion of the first port body 432 may pass through the fixing bracket 431 and communicate with the second port body 434 which will be described below. Another end portion of first port body 432 may communicate with an internal space of the second end portion 412.

The port lip 433 may extend from the first port body 432 and may be in close contact with an inner surface of the second end portion 412. That is, the port lip 433 may prevent or substantially prevent the first port body 432 from being separated from the second end portion 412 using a contact force between the port lip 433 and the second end portion 412.

The port lip 433 may protrude from an outer circumferential surface of the first port body 432 in a radial direction of the first port body 432. In an embodiment, the port lip 433 may continuously extend in a circumferential direction of the first port body 432 and may be formed in a substantially circular ring shape. As the first port body 432 is inserted into the second end portion 412, the port lip 433 may press the inner surface of the second end portion 412 in the radial direction of the fire extinguishing tube 410. In an embodiment, the port lip 433 may elastically deform a partial region of the second end portion 412 in the radial direction of the fire extinguishing tube 410 and may be in close contact with and hook-coupled to the inner surface of the second end portion 412. The port lip 433 may be formed so that a width decreases toward an end portion. Accordingly, the port lip 433 may further increase a magnitude of a pressing force acting between the port lip 433 and the inner surface of the second end portion 412.

The port lip 433 may be provided as a plurality of port lips 433. The plurality of port lips 433 may be arranged to be spaced by a certain distance (e.g., a set distance) from each other in the longitudinal direction of the first port body 432. However, a design of a number of and a distance between the port lips 433 may be variously changed according to a length, a cross-sectional area, and the like of first port body 432.

The second port body 434 may extend from an outer surface of the fixing bracket 431 disposed to face an external space of the housing 100. The second port body 434 may be formed in a hollow pipe shape of which both sides are open. A longitudinal direction of the second port body 434 may be disposed parallel to the longitudinal direction of the first port body 432. An end portion of the second port body 434 may protrude outward from the housing 100. The end portion of the second port body 434 may receive the fire extinguishing material supplied from the outside of the housing 100 through a pipe, a hose, or the like. Another end portion of the second port body 434 may pass through the fixing bracket 431 and communicate with the first port body 432. Accordingly, the fire extinguishing material supplied from the outside of the housing 100 may be transferred into the fire extinguishing tube 410 sequentially through the second port body 434 and the first port body 432.

The support member 500 is disposed in the housing 100 and supports the fire extinguishing member 400. The support member 500 may allow the fire extinguishing member 400 to be properly located in the housing 100 and guide the fire extinguishing member 400 to be inserted into the housing 100 or separated from the housing 100.

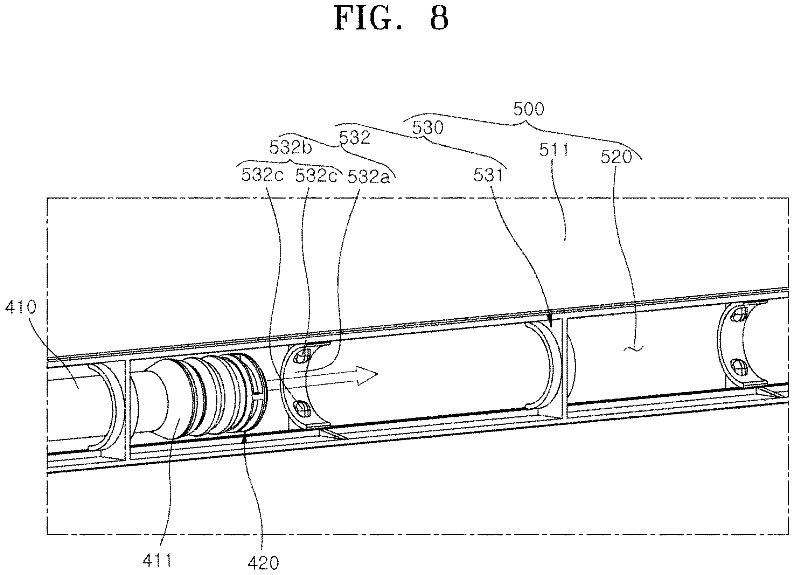

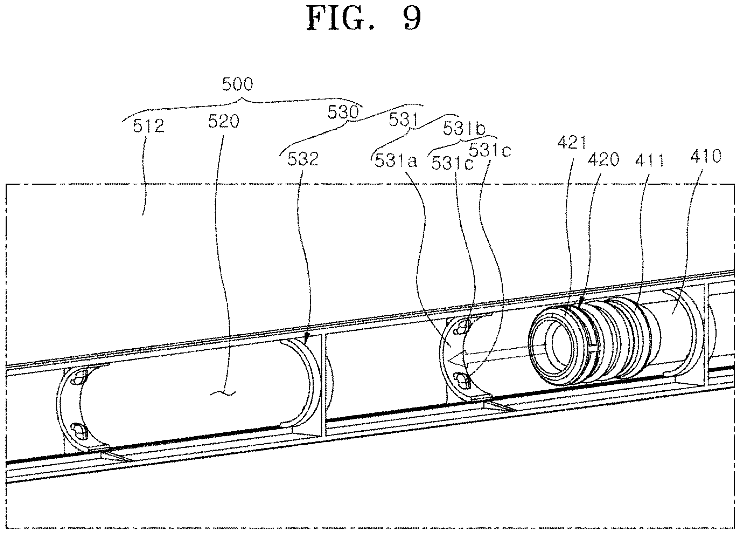

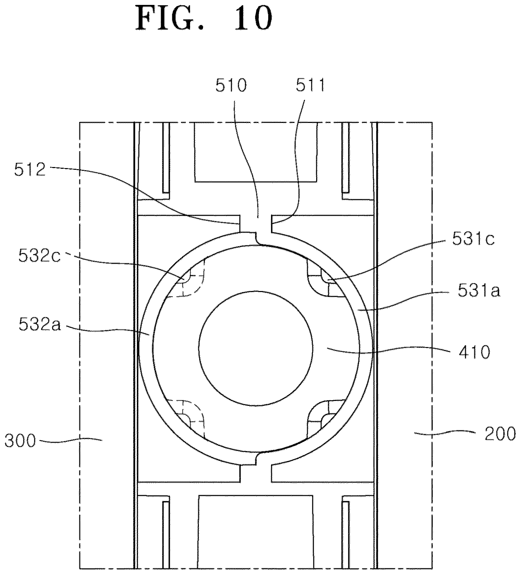

FIG. 8 is a schematic perspective view illustrating a configuration of the support member according to an embodiment of the present disclosure; FIG. 9 is a perspective view illustrating the configuration of the support member according to the embodiment of the present disclosure viewed from another viewpoint of FIG. 8; and FIG. 10 is a schematic cross-sectional view illustrating the configuration of the support member according to the embodiment of the present disclosure.

Referring to FIGS. 8 to 10, the support member 500 may include a holder body 510, a guide rail 520, and a sleeve 530.

In an embodiment, the holder body 510 may be disposed between the first battery cell 200 and the second battery cell 300 and may entirely support the guide rail 520 and the sleeve 530, which will be described below. An upper end portion of the holder body 510 may be coupled to the top plate 120. A lower end portion of the holder body 510 may be disposed to be spaced by a distance (e.g., a predetermined distance) from the bottom plate 110. A longitudinal direction of the holder body 510 may be disposed parallel to the longitudinal direction of the housing 100. Both, or opposite, end portions of the holder body 510 in the longitudinal direction may be spaced by distances (e.g., predetermined distances) from inner surfaces of the pair of end plates 140.

A first surface 511 facing the first battery cell 200 and a second surface 512 facing the second battery cell 300 may be formed at both, or opposite, sides of the holder body 510. The first surface 511 and the second surface 512 may be disposed to be parallel to and to face the side surfaces of the first battery cell 200 and the second battery cell 300.

The guide rail 520 may be formed to pass through the holder body 510 and may provide a path through which the fire extinguishing member 400 is inserted into the housing 100 or separated from the housing 100. In an embodiment, the guide rail 520 may be formed in a hole shape perpendicularly passing through the first surface 511 and the second surface 512 of the holder body 510. A longitudinal direction of the guide rail 520 may be disposed parallel to the longitudinal direction of the housing 100. Both, or opposite, end portions of the guide rail 520 in the longitudinal direction may pass through both end portions of the holder body 510 in the longitudinal direction. A height of the guide rail 520 may be greater than a diameter of the cap head 421. Accordingly, the fire extinguishing member 400 may be inserted into the guide rail 520 by passing through the end plate 140. As the fire extinguishing member 400 is completely inserted into the guide rail 520, the end cap 420 may protrude outward from the guide rail 520 through the end portion of the guide rail 520.

The sleeve 530 may be connected to the holder body 510 and disposed to surround the fire extinguishing tube 410. That is, the sleeve 530 may guide the fire extinguishing member 400 to move through the guide rail 520 and arrange a relative location of the fire extinguishing member 400 with respect to the guide rail 520.

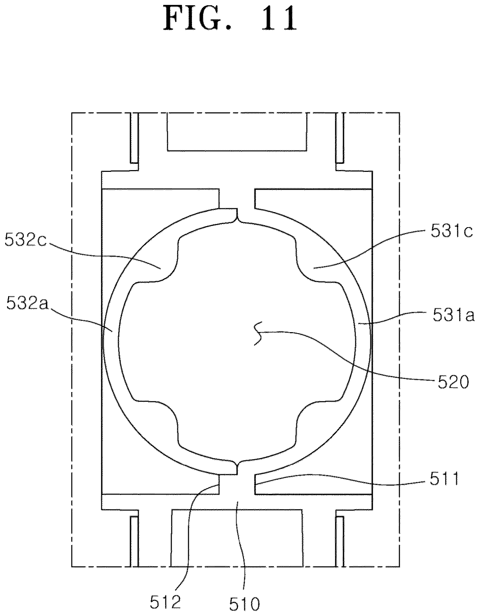

FIG. 11 is a schematic view illustrating a configuration of the sleeve according to an embodiment of the present disclosure.

Referring to FIGS. 8 to 11, the sleeve 530 may include a first sleeve 531 and a second sleeve 532.

The first sleeve 531 may be connected to the first surface 511 of the holder body 510 and disposed around (e.g., to surround) the fire extinguishing tube 410. The first sleeve 531 may be provided as a plurality of first sleeves 531. The plurality of first sleeves 531 may be arranged to be spaced by a distance (e.g., a set distance) from each other in the longitudinal direction of the guide rail 520.

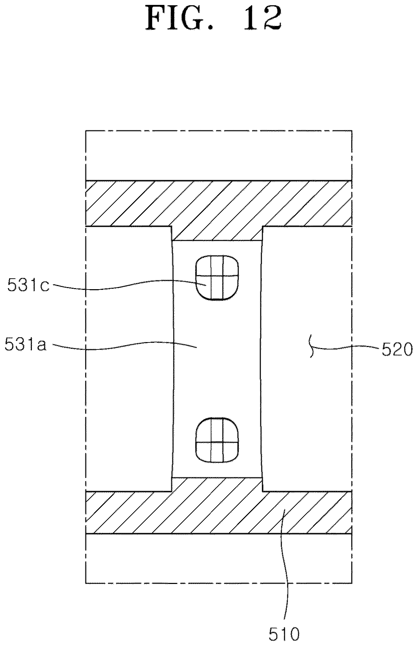

FIG. 12 is a schematic view illustrating a configuration of the first sleeve according to an embodiment of the present disclosure.

Referring to FIGS. 8 to 12, the first sleeve 531 may include a first support ring 531a and a first pressing member 531b.

The first support ring 531a may form a schematic exterior of the first sleeve 531 and may be disposed between the first battery cell 200 and the first surface 511. In an embodiment, the first support ring 531a may be formed in a semicircular ring shape. Both, or opposite, end portions of the first support ring 531a may be fixed to the first surface 511 of the holder body 510. Both, or opposite, end portions of the first support ring 531a may be vertically spaced apart from each other with the guide rail 520 disposed therebetween. A central axis of the first support ring 531a may be disposed to be coaxial with a central axis of the fire extinguishing tube 410. An inner surface of the first support ring 531a may be disposed to face a circumferential surface of a side of the fire extinguishing tube 410 facing the side surface of the first battery cell 200. A radius of the first support ring 531a may be greater than a radius of the fire extinguishing tube 410 or may be formed to correspond to the radius of the fire extinguishing tube 410.

The first pressing member 531b may protrude from the first support ring 531a toward the fire extinguishing tube 410 and press the circumferential surface of a side of the fire extinguishing tube 410 facing the side surface of the first battery cell 200. In an embodiment, the fire extinguishing tube 410 may be elastically deformed by a pressing force applied from the first pressing member 531b and may be in contact (e.g., strong close contact) with the first pressing member 531b.

The first pressing member 531b may include a plurality of first pressing protrusions 531c.

The first pressing protrusion 531c may protrude from the inner surface of the first support ring 531a toward the central axis of the first support ring 531a and the fire extinguishing tube 410. The first pressing protrusion 531c may be formed such that a width decreases (e.g., gradually decreases) toward an end portion. Accordingly, the first pressing protrusion 531c may increase a magnitude of a pressing force applied to the fire extinguishing tube 410. In an embodiment, the first pressing protrusion 531c may be formed in a substantially hemispherical shape.

The plurality of first pressing protrusions 531c may be arranged to be spaced by a distance (e.g., a set distance) from each other in a circumferential direction of the first support ring 531a. In an embodiment, an angle between a pair of adjacent first pressing protrusions 531c may be 45° or 90°.

The second sleeve 532 may be connected to the second surface 512 of the holder body 510 and disposed around (e.g., to surround) another side of the fire extinguishing tube 410. That is, the second sleeve 532 may be disposed around (e.g., to surround) a remaining circumferential surface of the fire extinguishing tube 410, which is not surrounded by the first sleeve 531. In an embodiment, the second sleeve 532 may be provided as a plurality of second sleeves 532. The plurality of second sleeves 532 may be arranged to be spaced by a distance (e.g., a set distance) from each other in the longitudinal direction of the guide rail 520.

The second sleeve 532 may include a second support ring 532a and a second pressing member 532b.

The second support ring 532a may form an exterior of the second sleeve 532 and may be disposed between the second battery cell 300 and the second surface 512. In an embodiment, the second support ring 532a may be formed in a semicircular ring shape. Both, or opposite, end portions of the second support ring 532a may be fixed to the second surface 512 of the holder body 510. Both, or opposite, end portions of the second support ring 532a may be vertically spaced apart from each other with the guide rail 520 interposed therebetween. A central axis of the second support ring 532a may disposed to be coaxial with the central axis of the fire extinguishing tube 410. An inner surface of the second support ring 532a may be disposed to face a peripheral surface of the another side of the fire extinguishing tube 410 facing the side surface of the second battery cell 300. A radius of the second support ring 532a may be greater than the radius of the fire extinguishing tube 410 or formed to correspond to the radius of the fire extinguishing tube 410.

The second pressing member 532b may protrude from the second support ring 532a toward the fire extinguishing tube 410 and press the circumferential surface of the another side of the fire extinguishing tube 410 facing the side surface of the second battery cell 300. In an embodiment, the fire extinguishing tube 410 may be elastically deformed by a pressing force applied from the second pressing member 532b and may be in forcibly close contact with the second pressing member 532b.

In an embodiment, the second pressing member 532b may include a plurality of second pressing protrusions 532c.

The second pressing protrusion 532c may protrude from the inner surface of the second support ring 532a toward the central axis of the second support ring 532a and the fire extinguishing tube 410. The second pressing protrusion 532c may be formed such that a width decreases (e.g., gradually decreases) toward an end portion. Accordingly, the second pressing protrusion 532c may increase a magnitude of the pressing force applied to the fire extinguishing tube 410. In an embodiment, the second pressing protrusion 532c may be formed in a substantially hemispherical shape.

The plurality of second pressing protrusions 532c may be arranged to be spaced by a distance (e.g., a set distance) from each other in a circumferential direction of the second support ring 532a. In an embodiment, an angle between a pair of adjacent second pressing protrusions 532c may be 45° or 90°.

The first sleeve 531 and the second sleeve 532 may be alternately disposed in the longitudinal direction of the guide rail 520. That is, a second sleeve 532 may be disposed between a pair of adjacent first sleeves 531. Accordingly, while the fire extinguishing tube 410 is inserted into or separated from the guide rail 520, the first pressing member 531b and the second pressing member 532b may prevent or substantially prevent both, or opposite, circumferential surfaces of the fire extinguishing tube 410 from coming into contact with the guide rail 520 at a same time and prevent or substantially prevent movement of the fire extinguishing tube 410, or such movement being restricted. In addition, when the fire extinguishing tube 410 is completely inserted into the guide rail 520, as the first pressing member 531b and the second pressing member 532b support different portions of the circumferential surface of the fire extinguishing tube 410, the first pressing member 531b and the second pressing member 532b may prevent or substantially prevent the fire extinguishing tube 410 from being separated from the guide rail 520.

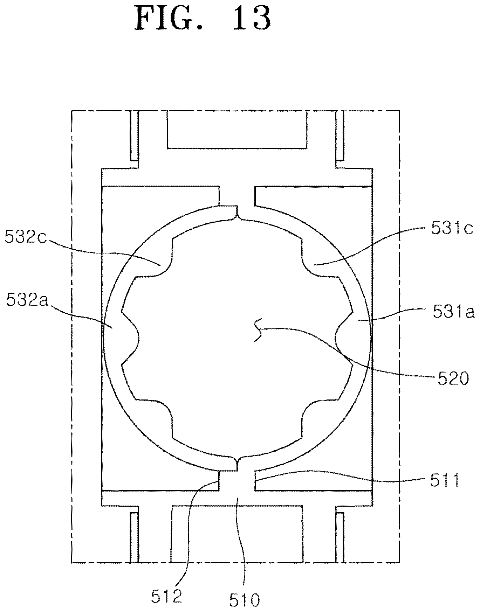

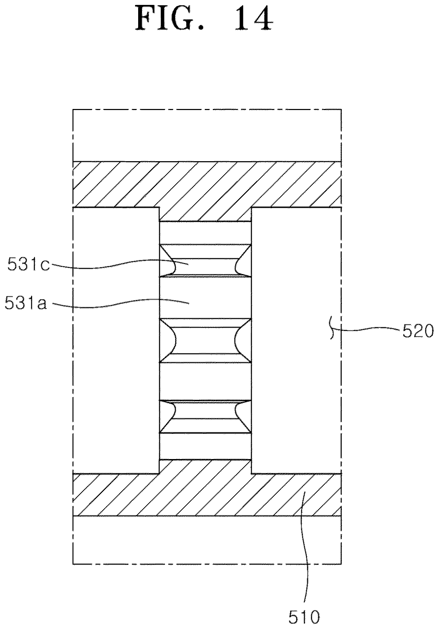

FIGS. 13 and 14 are views illustrating modified examples of the first pressing protrusion and the second pressing protrusion illustrated in FIGS. 11 and 12.

Referring to FIGS. 13 and 14, in an embodiment, a plurality of first pressing protrusions 531c and second pressing protrusions 532c may each be formed in a semi-cylindrical shape of which a longitudinal direction is disposed parallel to a longitudinal direction of a guide rail 520.

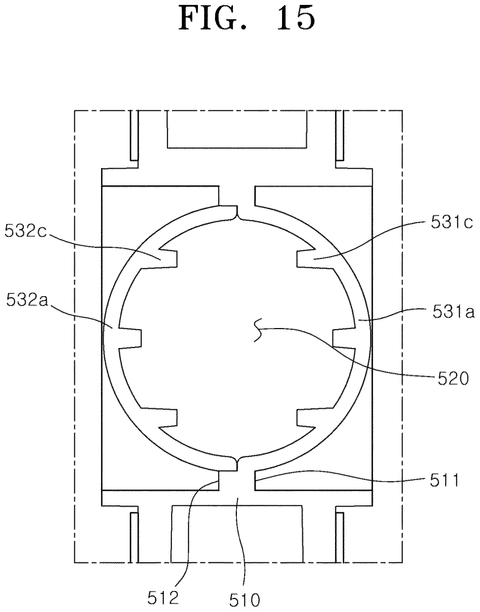

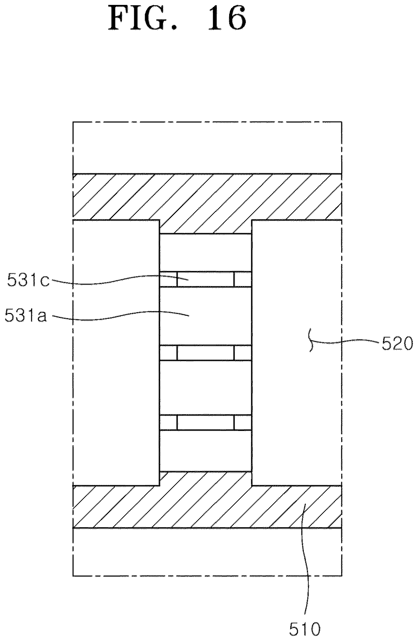

FIGS. 15 and 16 are views illustrating other modified examples of the first pressing protrusion and the second pressing protrusion illustrated in FIGS. 11 and 12.

Referring to FIGS. 15 and 16, in an embodiment, a plurality of first pressing protrusions 531c and second pressing protrusions 532c may be formed in rod shapes extending from inner surfaces of a first supporting ring 531a and a second supporting ring 532a in a direction perpendicular to a first surface 511 and a second surface 512, respectively. The plurality of first pressing protrusions 531c may extend from the inner surface of the first supporting ring 531a to be perpendicular to the first surface 511 and the second surface 512, and end portions thereof may be disposed to face a guide rail 520. In addition, the plurality of second pressing protrusions 532c may extend from the inner surface of the second supporting ring 532a to be perpendicular to the first surface 511 and the second surface 512, and the end portions thereof may be disposed to face the first pressing protrusions 531c with the guide rail 520 interposed therebetween.

The support member 500 according to the present embodiment may further include an end sleeve 540.

The end sleeve 540 is spaced apart from the holder body 510 and supports the end cap 420. Accordingly, the end sleeve 540 may prevent or substantially prevent the fire extinguishing tube 410 from being bent due to a weight of the end cap 420 protruding outward from the guide rail 520.

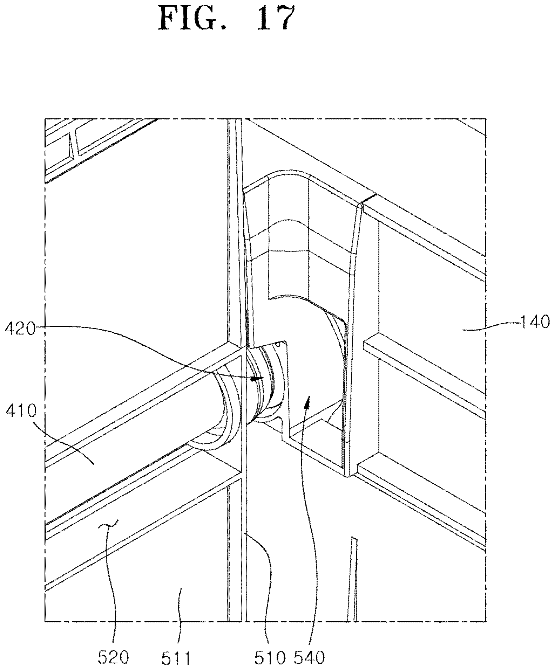

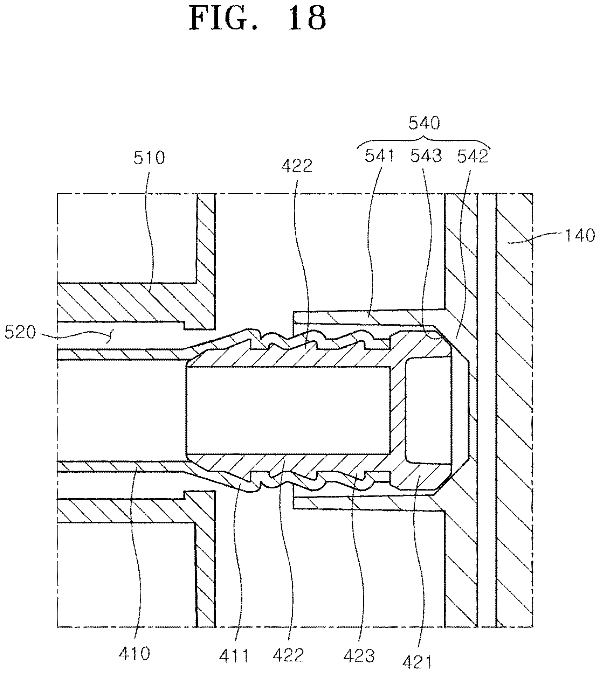

FIG. 17 is a schematic perspective view illustrating a configuration of the end sleeve according to an embodiment of the present disclosure; and FIG. 18 is a schematic cross-sectional view illustrating the configuration of the end sleeve according to the embodiment of the present disclosure.

Referring to FIGS. 17 and 18, the end sleeve 540 may include a sleeve body 541 and a seating portion 542.

The sleeve body 541 may extend from the housing 100 toward the holder body 510. The sleeve body 541 may extend from an inner surface of the end plate 140 of the pair of end plates 140 facing the end cap 420 toward the holder body 510. The sleeve body 541 may have a hollow cylindrical shape of which a side is open. A longitudinal direction of the sleeve body 541 may be disposed parallel to the longitudinal direction of the guide rail 520. The open side of the sleeve body 541 may be disposed to face the holder body 510 and may be spaced by a distance (e.g., a predetermined distance) from and face an end portion of the guide rail 520 from which the end cap 420 protrudes. The end cap 420 may be inserted into the sleeve body 541 through the open side of the sleeve body 541.

The seating portion 542 may be disposed in the sleeve body 541 and may be in contact with an end portion of the end cap 420 inserted in the sleeve body 541. The seating portion 542 may be disposed at an inner corner side of the sleeve body 541. The seating portion 542 may extend in a substantially ring shape in a circumferential direction of the sleeve body 541. In an embodiment, the seating portion 542 may be formed of an elastically deformable material, such as rubber or silicone.

The seating portion 542 may include an inclined surface 543 obliquely disposed with respect to an extending direction of the sleeve body 541. The inclined surface 543 may be disposed on a boundary surface between the seating portion 542 and the sleeve body 541. As the end cap 420 is inserted in the sleeve body 541, the inclined surface 543 may be in contact with a corner side of an end portion of the cap head 421. In an embodiment, the seating portion 542 may be deformed to be contracted by a reaction force generated between the inclined surface 543 and the cap head 421. As the inclined surface 543 is obliquely disposed with respect to the longitudinal direction of the sleeve body 541, the seating portion 542 may press the cap head 421 toward a central axis of the end cap 420. Accordingly, a state in which the end cap 420 is coaxially aligned with the sleeve body 541 can be maintained.

The battery module according to the present embodiment may further include a channel 600 which is disposed in the housing 100 and guides a flow of the fire extinguishing material sprayed from the fire extinguishing member 400.

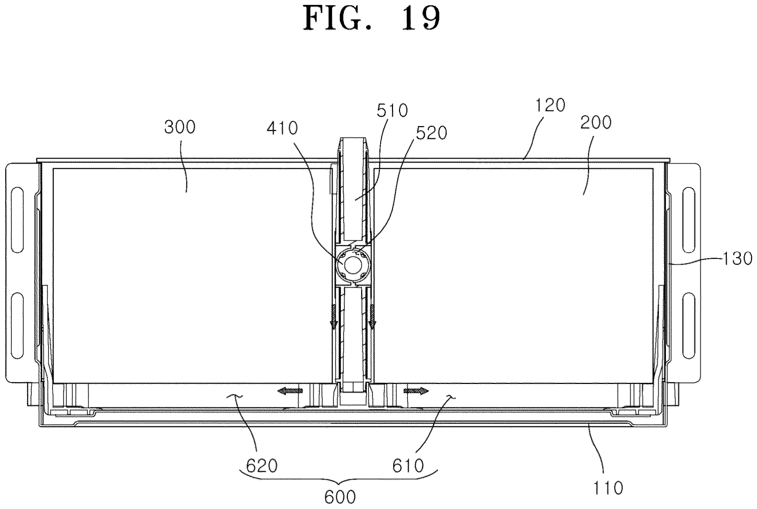

FIG. 19 is a schematic cross-sectional view illustrating a configuration of the channel according to an embodiment of the present disclosure.

Referring to FIG. 19, the channel 600 may include a first channel 610 and a second channel 620.

The first channel 610 may be disposed between a bottom surface of the housing 100, that is, the upper surface of the bottom plate 110, and the lower surface of the first battery cell 200. As an example, as the lower surface of the first battery cell 200 and the upper surface of the bottom plate 110 are spaced apart from each other, and an example of the first channel 610 may be an empty space formed between the lower surface of the first battery cell 200 and the upper surface of the bottom plate 110. A longitudinal direction of the first channel 610 may extend in the longitudinal direction of the housing 100. In an embodiment, the first channel 610 may be disposed to face all lower surfaces of the plurality of first battery cells 200. A width of the first channel 610 may be greater than a width of the first battery cell 200. An end portion of the first channel 610 may communicate with a space between the side surface of the first battery cell 200 and the holder body 510.

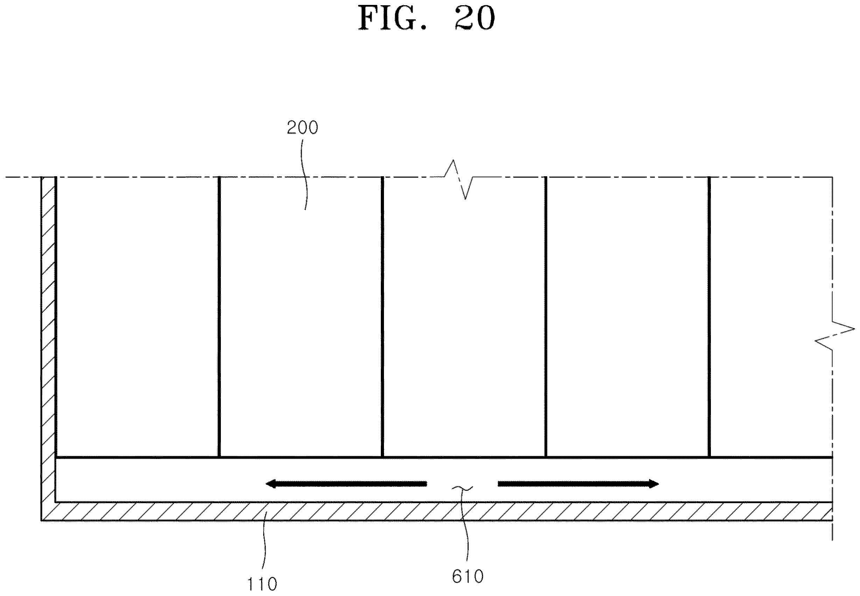

FIG. 20 is a schematic view illustrating a state in which the fire extinguishing material is introduced into the first channel according to an embodiment of the present disclosure.

Referring to FIG. 20, when a fire occurs at any one first battery cell 200, the fire extinguishing material sprayed from the fire extinguishing tube 410 toward a side surface of the first battery cell 200 may be introduced into the first channel 610 through the space between the side surface of the first battery cell 200 and the holder body 510.

The fire extinguishing material introduced into the first channel 610 may flow in a longitudinal direction of the first channel 610 and cool the first battery cell 200 located adjacent to the first battery cell 200 at which the fire occurs. Accordingly, the first channel 610 may prevent or substantially prevent a fire from occurring at the first battery cell 200 from spreading to the adjacent first battery cell 200.

The second channel 620 may be disposed between the bottom surface of the housing 100, that is, the upper surface of the bottom plate 110, and the lower surface of the second battery cell 300. As an example, as the lower surface of the second battery cell 300 and the upper surface of the bottom plate 110 are spaced apart from each other, the second channel 620 may be an empty space formed between the lower surface of the second battery cell 300 and the upper surface of the bottom plate 110. A longitudinal direction of the second channel 620 may extend in the longitudinal direction of the housing 100. Accordingly, the second channel 620 may be disposed to face all lower surfaces of the plurality of second battery cells 300. A width of the second channel 620 may be greater than a width of the second battery cell 300. An end portion of the second channel 620 may communicate with a space between the side surface of the second battery cell 300 and the holder body 510.

When a fire occurs at any one second battery cell 300, the fire extinguishing material sprayed from the fire extinguishing tube 410 toward a side surface of the second battery cell 300 may be introduced into the second channel 620 through the space between the side surface of the second battery cell 300 and the holder body 510.

The fire extinguishing material introduced into the second channel 620 may flow in the longitudinal direction of the second channel 620 and cool the second battery cell 300 located adjacent to the second battery cell 300 at which the fire occurs. Accordingly, the second channel 620 can prevent or substantially prevent a fire occurring at any one second battery cell 300 from spreading to the adjacent second battery cell 300.

Herein, a battery module according to another embodiment of the present disclosure will be described.

The battery module according to the present embodiment of the present disclosure may be provided such that a configuration of a first pressing member 531b and a second pressing member 532b are different from that of the battery module according to the previously described embodiment of the present disclosure.

Accordingly, when the battery module according to the present embodiment of the present disclosure is described, only a detailed configuration of the first pressing member 531b and the second pressing member 532b that is different from that of the battery module according to the previously described embodiments of the present disclosure will be described.

The description of the housing 100, the first battery cell 200, the second battery cell 300, the fire extinguishing member 400, the support member 500, and the channel 600 of the battery module according to the previously described embodiments of the present disclosure may be applied to the remaining components of the battery module according to the present embodiment of the present disclosure.

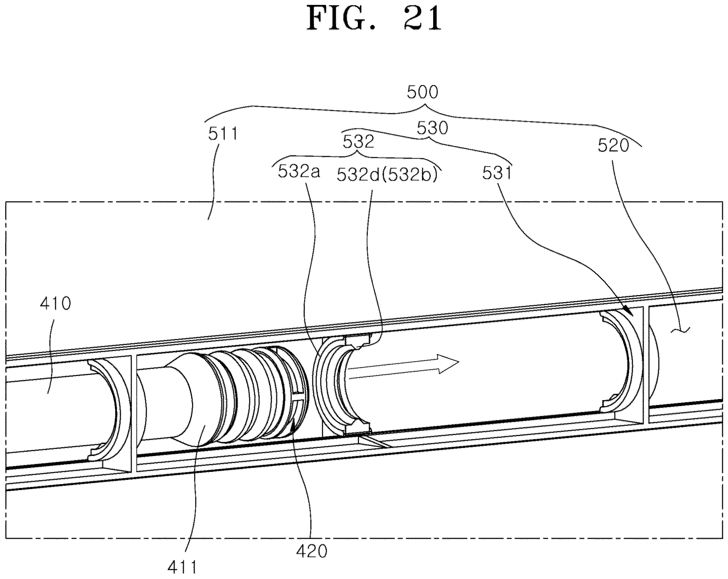

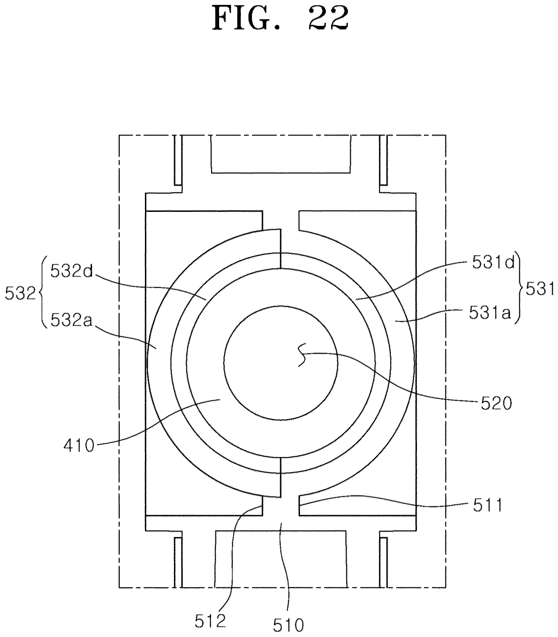

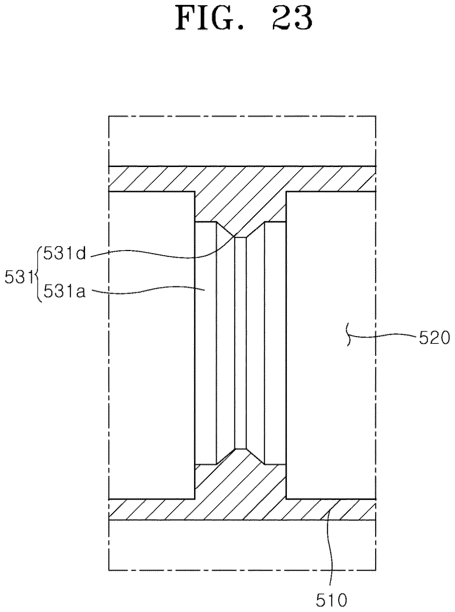

FIG. 21 is a schematic perspective view illustrating the configuration of the first pressing member and the second pressing member according to the present embodiment of the present disclosure; FIG. 22 is a schematic front view illustrating the configuration of the first pressing member and the second pressing member according to the embodiment of FIG. 21; and FIG. 23 is a schematic cross-sectional view illustrating a configuration of the first pressing member according to the embodiment of FIG. 21.

Referring to FIGS. 21 to 23, the first pressing member 531b according to the present embodiment may include a first pressing ring 531d, and the second pressing member 532b may include a second pressing ring 532d.

The first pressing ring 531d may protrude from an inner surface of a first support ring 531a toward a central axis of the first support ring 531a and a fire extinguishing tube 410. The first pressing ring 531d may continuously extend in a circumferential direction of the first support ring 531a. Accordingly, in an embodiment, the first pressing ring 531d may have a substantially semicircular cross-sectional shape. In an embodiment, the first pressing ring 531d may be formed such that a width decreases (e.g., gradually decreases) toward an end portion.

The second pressing ring 532d may protrude from an inner surface of a second support ring 532a toward a central axis of the second support ring 532a and the fire extinguishing tube 410. In an embodiment, the second pressing ring 532d may continuously extend in a circumferential direction of the second support ring 532a. Accordingly, in an embodiment, the second pressing ring 532d may have a substantially semicircular cross-sectional shape. In an embodiment, the second pressing ring 532d may be formed such that a width decreases (e.g., gradually decreases) toward an end portion.

Herein, a battery module according to another embodiment of the present disclosure will be described.

The battery module according to the present embodiment of the present disclosure may be provided, such that a detailed configuration of an end sleeve 540 is different from that of the battery module according to the embodiment of FIG. 1.

Accordingly, when the battery module according to the present embodiment of the present disclosure is described, a detailed configuration of the end sleeve 540 that is different from that of the battery module according to the embodiment of FIG. 1 will be described.

The description of the housing 100, the first battery cell 200, the second battery cell 300, the fire extinguishing member 400, the support member 500, the channel 600 of the battery module according to the embodiment of FIG. 1 may be applied to the remaining components of the battery module according to the present embodiment of the present disclosure.

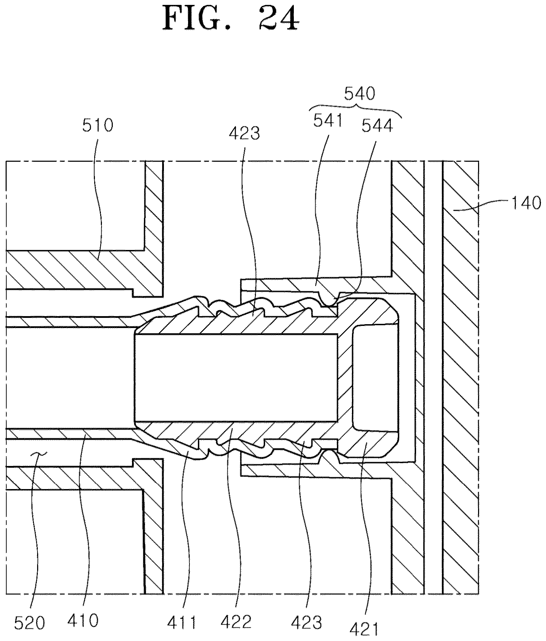

FIG. 24 is a schematic cross-sectional view illustrating the configuration of the end sleeve according to the present embodiment of the present disclosure.

Referring to FIG. 24, the end sleeve 540 according to the present embodiment may include a sleeve body 541 and a catching portion 544.

The catching portion 544 may protrude from an inner surface of the sleeve body 541 and may be in contact with an end cap 420. In an embodiment, the catching portion 544 may be formed in a protrusion shape protruding from the inner surface of the sleeve body 541 toward a central axis of the sleeve body 541. In an embodiment, as the end cap 420 is completely inserted into the sleeve body 541, the catching portion 544 may be inserted between a cap head 421 and a cap lip 423 or between one pair of adjacent cap lips 423. Accordingly, the catching portion 544 may prevent or substantially prevent the end cap 420 from being separated from the sleeve body 541 using a hooking force between the catching portion 544 and the cap head 421 or the cap lip 423.

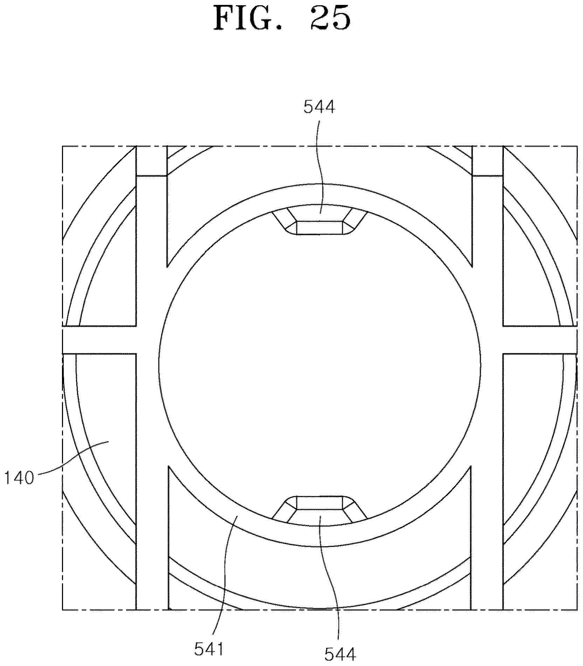

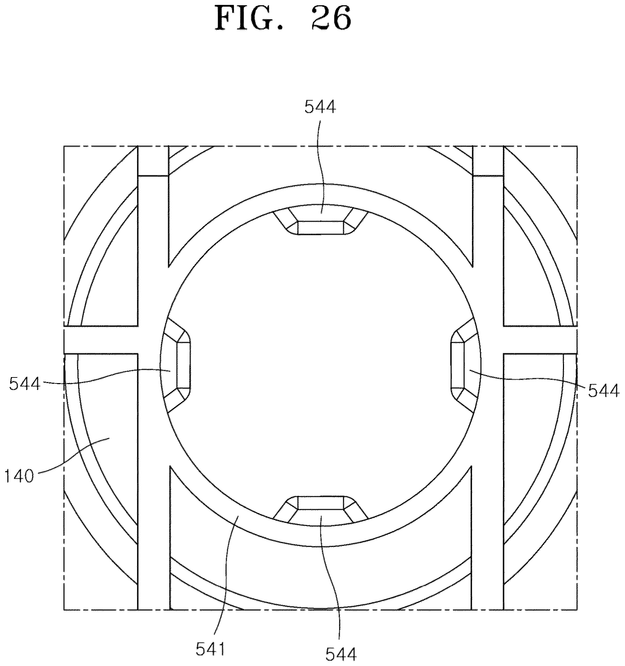

FIGS. 25 and 26 are views illustrating modified examples of the catching portion illustrated in FIG. 24.

Referring to FIGS. 25 and 26, a catching portion 544 may be provided as a plurality of catching portions 544. The plurality of catching portions 544 may be disposed to be spaced by a distance (e.g., a set distance) from each other in a circumferential direction of a sleeve body 541. In an embodiment, the plurality of catching portions 544 may be arranged at equal intervals in the circumferential direction of the sleeve body 541. For example, as illustrated in FIG. 25, the catching portion 544 may be provided as a pair of catching portions 544, and an angle between the pair of catching portions 544 may be 180°. In an embodiment, as illustrated in FIG. 26, the catching portion 544 may be provided as four catching portions 544, and an angle between a pair of adjacent catching portions 544 may be 90°.

According to one or more embodiments of the present disclosure, a fire extinguishing member directly sprays a fire extinguishing material to a first battery cell and a second battery cell in a housing, and a fire extinguishing efficiency can be improved.

According to one or more embodiments of the present disclosure, a fire extinguishing member is detachably installed in a support member and, when the fire extinguishing member malfunctions or is damaged, only the fire extinguishing member can be replaced, and thus costs incurred when an entire module is discarded can be reduced.

According to one or more embodiments of the present disclosure, a first pressing member and a second pressing member are alternately disposed in a longitudinal direction of a guide rail, and a support force on a fire extinguishing member can be secured, and the fire extinguishing member can smoothly or easily move through the guide rail.

According to one or more embodiments of the present disclosure, a phenomenon in which an end portion of a fire extinguishing member sags due to its weight can be prevented or substantially prevented by an end sleeve, and a support force on the fire extinguishing member can be further increased.

According to one or more embodiments of the present disclosure, when a fire occurs at any one of a first battery cell and a second battery cell, the fire can be prevented or substantially prevented from spreading to an adjacent first battery cell or second battery cell.

However, aspects and effects obtainable through the present disclosure are not limited to the above aspects and effects, and other technical aspects and effects that are not mentioned will be clearly understood by those skilled in the art from the following description of the present disclosure.

While the present disclosure has been described with reference to some embodiments shown in the drawings, these embodiments are merely illustrative and it is to be understood that various modifications and equivalent other embodiments can be derived by those skilled in the art on the basis of the embodiments.

## Claims

1. A battery module comprising:
a housing;
a first battery cell in the housing;
a second battery cell in the housing and spaced apart from the first battery cell;
a fire extinguishing member between the first battery cell and the second battery cell and configured to spray a fire extinguishing material on the first battery cell and the second battery cell; and
a support member in the housing and supporting the fire extinguishing member.

2. The battery module as claimed in claim 1, wherein the fire extinguishing member comprises:
a fire extinguishing tube comprising a first end portion and a second end portion;
an end cap connected to the first end portion to seal the fire extinguishing tube; and
a supply port connected to the second end portion to supply the fire extinguishing material to the fire extinguishing tube.

3. The battery module as claimed in claim 2, wherein the fire extinguishing tube is melted when heated at a certain temperature or more.

4. The battery module as claimed in claim 2 or claim 3, wherein the fire extinguishing tube is elastically deformable.

5. The battery module as claimed in any one of claims 2 to 4, wherein the end cap comprises:
a cap head facing the first end portion;
a cap body extending from the cap head and inserted in the first end portion; and
a cap lip extending from the cap body and in contact with an inner surface of the first end portion.

6. The battery module as claimed in any one of claims 2 to 5, wherein the supply port comprises:
a fixing bracket facing the second end portion and coupled to the housing;
a first port body extending from the fixing bracket, inserted in the second end portion, and in communication with an internal space of the second end portion;
a port lip extending from the first port body and in contact with an inner surface of the second end portion; and
a second port body extending from the fixing bracket, protruding outward from the housing, and in communication with the first port body.

7. The battery module as claimed in any one of claims 2 to 6, wherein the support member comprises:
a holder body between the first battery cell and the second battery cell;
a guide rail passing through the holder body and in which the fire extinguishing member is inserted; and
a sleeve connected to the holder body and surrounding the fire extinguishing tube.

8. The battery module as claimed in claim 7, wherein
the holder body comprises a first surface facing the first battery cell and a second surface facing the second battery cell, and
the sleeve comprises a first sleeve connected to the first surface and surrounding a side of the fire extinguishing tube, and a second sleeve connected to the second surface and surrounding another side of the fire extinguishing tube.

9. The battery module as claimed in claim 8, wherein
the first sleeve and the second sleeve are provided as a plurality of first sleeves and a plurality of second sleeves, and
the plurality of the first sleeves and the plurality of second sleeves are arranged in a longitudinal direction of the guide rail.

10. The battery module as claimed in claim 8 or claim 9, wherein the first sleeve and the second sleeve are alternately arranged in a longitudinal direction of the guide rail.

11. The battery module as claimed in any one of claims 8 to 10, wherein
the first sleeve comprises a first support ring between the first battery cell and the first surface and a first pressing member protruding from the first support ring toward the fire extinguishing tube, and
the second sleeve comprises a second support ring between the second battery cell and the second surface and a second pressing member protruding from the second support ring toward the fire extinguishing tube.

12. The battery module as claimed in any one of claims 7 to 11, wherein the support member further comprises an end sleeve spaced apart from the holder body and supporting the end cap.

13. The battery module as claimed in claim 12, wherein the end sleeve comprises:
a sleeve body extending from the housing toward the holder body and in which the end cap is inserted; and
a seating portion in the sleeve body and in contact with an end portion of the end cap.

14. The battery module as claimed in claim 12 or claim 13, wherein
the end cap comprises a cap head facing the first end portion, a cap body extending from the cap head and inserted in the first end portion, and a cap lip extending from the cap body and in contact with an inner surface of the first end portion, and
the end sleeve comprises a sleeve body extending from the housing toward the holder body and in which the end cap is inserted, and a catching portion protruding from an inner surface of the sleeve body and in contact with the end cap.

15. The battery module as claimed in any one of the preceding claims, further comprising a channel in the housing to guide a flow of the fire extinguishing material sprayed from the fire extinguishing member.
